# EUROPÄISCHE PATENTSCHRIFT

(11) **EP 1 158 235 B1**
(45) Veröffentlichungstag und Bekanntmachung des Hinweises auf die Patenterteilung: **13.10.2004**
(21) Anmeldenummer: 01110531.9
(22) Anmeldetag: 28.04.2001
(51) Int. Cl.: F16L 33/08

(54) **Schneckengewindeschelle**
Worm drive clamp
Collier de serrage à vis tangente

(30) Priorität: 25.05.2000 DE 10026020
(43) Veröffentlichungstag der Anmeldung: 28.11.2001
(73) Patentinhaber: Rasmussen GmbH, 63477 Maintal (DE)
(72) Erfinder: Keller, Werner, 63477 Maintal (DE); Mann, Stephan, 63599 Bieber (DE); Redemann, Hartmut, 63454 Hanau (DE); Stichel, Willi, 63477 Maintal (DE)
(74) Vertreter: Knoblauch, Andreas, Dr.-Ing.

(56) Entgegenhaltungen:
- EP-A- 1 083 376
- DE-C- 19 633 435
- US-A- 3 950 830
- US-A- 4 257 149

## Beschreibung

Die Erfindung bezieht sich auf eine Schneckengewindeschelle mit einem Spannband, einem Gehäuse und einer einen Kopf und einen Gewindeschaft aufweisenden Spannschraube, wobei das Spannband sich überlappende Endabschnitte aufweist, von denen der radial äußere mit Gewindeelementen versehen ist, die mit dem Gewindeschaft in Eingriff stehen, und der radial innere Endabschnitt mit einem Boden des die Endabschnitte und den Gewindeschaft der Spannschraube umgebenden Gehäuses, das die Spannschraube in beiden Umfangsrichtungen der Schelle abstützt, formschlüssig verbunden ist, wobei das Gehäuse aus einem Gehäuseband besteht, dessen Enden im Bereich des Bodens eine Stoßfuge begrenzen und mit einander durch ineinandergreifende Hinterschneidungen ihrer die Stoßfuge begrenzenden Ränder verbunden sind, wobei der Boden des Gehäuses wenigstens an seinem dem Spannschraubenkopf abgekehrten Querrand beiderseits der Stoßfuge eine radial nach außen abgewinkelte Zunge aufweist, die durch eine Öffnung im radial inneren Endabschnitt des Spannbands ragt.

Bei einer bekannten Schneckengewindeschelle dieser Art (DE 196 33 435 C1) ist auf seiten jedes Querrands des Gehäusebodens nur eine Öffnung in einer sich quer zum Band erstreckenden, radial nach außen gedrückten Nut des Spannbands ausgebildet. An jedem Querrand greifen die beiden Zungen gemeinsam in dieselbe Öffnung, wobei die Zungen seitlich aneinander anliegen. Die Zungen sollen ein Aufspreizen der Stoßfuge von einem mittleren Bereich aus, in dem die Ränder der Stoßfuge formschlüssig durch ineinandergreifende Hinterschneidungen verbunden sind, zu den jeweiligen Querrändern des Gehäusebodens hin verhindern, insbesondere zu dem auf seiten des Spannschraubenkopfes liegenden Querrand.

Diese Art der Verbindung der aneinander stoßenden Enden des Gehäusebandes hält zwar sehr hohen Spannkräften stand. Bei noch höheren Spannkräften besteht dagegen die Gefahr einer Verformung insbesondere des Bereichs derjenigen Spannbandöffnung, die auf seiten des dem Spannschraubenkopf abgekehrten Querrands des Gehäusebodens liegt, und weiterhin die Gefahr einer Aufspreizung der Stoßfuge, insbesondere auf seiten des Spannschraubenkopfes.

Der Erfindung liegt die Aufgabe zugrunde, bei einer Schneckengewindeschelle der eingangs genannten Art die Gefahr einer Verformung des Spannbandes zu verringern und die Verbindung der Enden des Gehäusebandes im Bereich des Gehäusebodens noch haltbarer auszugestalten.

Erfindungsgemäß ist diese Aufgabe dadurch gelöst, daß die Zungen in Umfangsrichtung des Spannbands gerichtet sind und jeder Zunge eine eigene Öffnung zugeordnet ist, an die eine radial nach innen gedrückte, vom jeweiligen Bodenrand weg in Umfangsrichtung des Spannbands gerichtete Sicke angrenzt, in die jeweils eine der Zungen passend eingreift.

Bei dieser Lösung liegen auf jeder Seite einer Zunge zwei Bereiche der radialen freien Stirnflächen der benachbarten Sicken, mithin insgesamt vier Bereiche, an einem Querrand des Gehäusebodens als Stützflächen an. Diese Bereiche unterliegen daher einer geringeren Flächenpressung als nur zwei Bereiche, wie im bekannten Falle. Ferner wird die Aufspreizung der Stoßfuge im Gehäuseboden insbesondere auf seiten des Spannschraubenkopfes durch die seitliche Auslenkung des radial äußeren Endabschnitts des Spannbands dadurch bis zu noch höheren Spannkräften verhindert, daß sich jede Zunge an jeweils einer Seitenwand der Sicke anlegt, wenn die eine Seitenwand des Gehäuses aufgrund einer in Axialrichtung der Schelle auf sie einwirkenden Kraft des radial äußeren Endabschnitts des Spannbands seitlich (axial) im Sinne einer Aufspreizung der Stoßfuge belastet wird. Bislang wurde dagegen nur die eine der beiden nebeneinander liegenden Zungen am Rand der einzigen beide Zungen aufnehmenden Öffnung abgestützt.

Vorzugsweise ist dafür gesorgt, daß die Zungen von der Unterseite des Gehäusebodens weg radial nach außen gedrückt sind. Bei dieser Ausbildung ergibt sich eine Abstufung am Übergang vom Gehäuseboden zu den Zungen. Hierbei kann sich der Gehäuseboden unterhalb der Zungen an den radialen freien Stirnflächen der Sicken in Umfangsrichtung der Schelle abstützen.

Sodann ist es günstig, wenn der Gehäuseboden beiderseits der Stoßfuge über seine Innenseite vorstehende Vorsprünge aufweist, die in die dem Schraubenkopf zunächst liegenden Öffnung ragen. Diese Vorsprünge nehmen zusätzlich Spreizkräfte auf und tragen daher ebenfalls zum Zusammenhalt des Gehäusebodens bei.

Die Vorsprünge können durch zwischen den Schenkeln U-förmiger Einschnitte im Boden herausgedrückte Laschen gebildet sein, die mit ihrem freien Ende an jeweils einem der am weitesten von der Stoßfuge entfernt liegenden Ränder der Öffnungen anliegen. Diese Laschen können besonders hohe Kräfte aufnehmen und lassen sich auf einfache Weise ausbilden.

Ferner kann dafür gesorgt sein, daß das Gehäuse nur auf seiner, bei oberhalb des Spannbands liegender Spannschraube in Richtung vom Kopf zum Schaft der Spannschraube gesehen, rechten Seite einen seitlichen Ausleger aufweist, dessen Wand radial außerhalb des radial äußeren Endabschnitts des Spannbands neben dem freien Ende des Spannschraubenschafts einen von einem gewölbten First des Gehäuses tangential zu einem radialen Wandteil des Auslegers schräg abfallenden Wandteil und neben einem mittleren Abschnitt des Spannschraubenschafts einen an diesem anliegenden gewölbten Wandteil und einen den gewölbten Wandteil mit dem radialen Wandteil verbindenden axialen Wandteil aufweist. Dieser Ausleger verhindert ein seitliches Umkippen des Gehäuses in Drehrichtung der Spannschraube. Sein gewölbter Wandteil trägt zur Führung der Spannschraube tangential zur Schelle bei. Der schräg abfallende Wandteil verhindert eine Aufweitung des gewölbten und des axialen Wandteils beim Spannen. Gleichzeitig verringert der schräg abfallende Wandteil die Berührungsfläche zwischen dem Gewinde des Gewindeschafts der Spannschraube und der Wand des Gehäuses, so daß das Gewinde im Bereich des schräg abfallenden Wandteils einer geringeren Abnutzung unterliegt. Die Spannschraube läßt sich daher auch nach mehrmaliger Betätigung bzw. Umdrehung weiterhin leicht drehen. Dementsprechend bleibt das zum Spannen der Spannschraube erforderliche Drehmoment über eine längere Benutzungsdauer gering.

Der gewölbte Wandteil und der axiale Wandteil können durch Eindrückung der Seitenwand des Gehäuses gebildet sein, so daß ein quer zur Spannschraube verlaufender Wandteil zwischen dem schräg abfallenden Wandteil, dem gewölbten Wandteil und dem axialen Wandteil verbleibt. Dies ergibt eine hohe Steifigkeit der Seitenwand des Auslegers gegen eine Aufweitung.

Vorzugsweise kreuzt die Ebene des quer verlaufenden Wandteils etwa die Mitte des mit dem Spannband in Gewindeeingriff stehenden Abschnitts der Spannschraube. Im Bereich der Mitte des mit dem Spannband in Gewindeeingriff stehenden Abschnitts der Spannschraube unterliegt das Gehäuse besonders hohen Kräften, die bestrebt sind, das Gehäuse aufzuweiten. In der genannten Lage wirkt der querverlaufende Wandteil einer solchen Aufweitung in besonders hohem Maße entgegen.

Die Ecken an dem dem Spannschraubenkopf abgekehrten Gehäuseende sind vorzugsweise abgerundet. Dadurch verringert sich die Gefahr, daß diese Ecken beim Spannen der Schneckengewindeschelle in das Material eines auf einem Stutzen oder Rohrstück festzuspannenden Endabschnitts eines Schlauches eindringen und den Schlauch beschädigen.

Die radial äußeren Ecken der freien Enden der Zungen können abgeschrägt sein. Sie behindern dann nicht, wie mit rechtwinkligen Kanten, die Bewegung des radial äußeren Endabschnitts des Spannbands relativ zu dem radial inneren Endabschnitt.

Sodann ist es vorteilhaft, wenn die Unterkante der Sikken mit der Unterseite des Gehäusebodens weitgehend fluchtet und die Tiefe der Sicken von ihrem an der jeweiligen Öffnung angrenzenden Ende bis zu ihrem anderen Ende stetig bis auf null abnimmt. Bei dieser Ausbildung ergibt sich ein weitgehend kontinuierlicher, kantenfreier Übergang zwischen dem Gehäuseboden und der Innenseite des Spannbands, bei entsprechend gleichmäßiger radialer Anpressung eines Schlauches am Umfang eines Stutzens oder Rohres.

Die Erfindung wird im folgenden anhand eines bevorzugten Ausführungsbeispiels in Verbindung mit der Zeichnung näher beschrieben. Hierin zeigen:
- Fig. 1: eine perspektivische Ansicht eines Ausführungsbeispiels einer erfindungsgemäßen Schneckengewindeschelle im geöffneten Zustand,
- Fig. 2: einen Ausschnitt der Schneckengewindeschelle nach Fig. 1 in größerem Maßstab,
- Fig. 3: eine Vorderansicht der Schelle nach Fig. 1 vom Kopfende der Spannschraube her gesehen,
- Fig. 4: den Querschnitt IV-IV der Schneckengewindeschelle nach Fig. 3 in vergrößertem Maßstab,
- Fig. 5: den Schnitt V-V der Fig. 4,

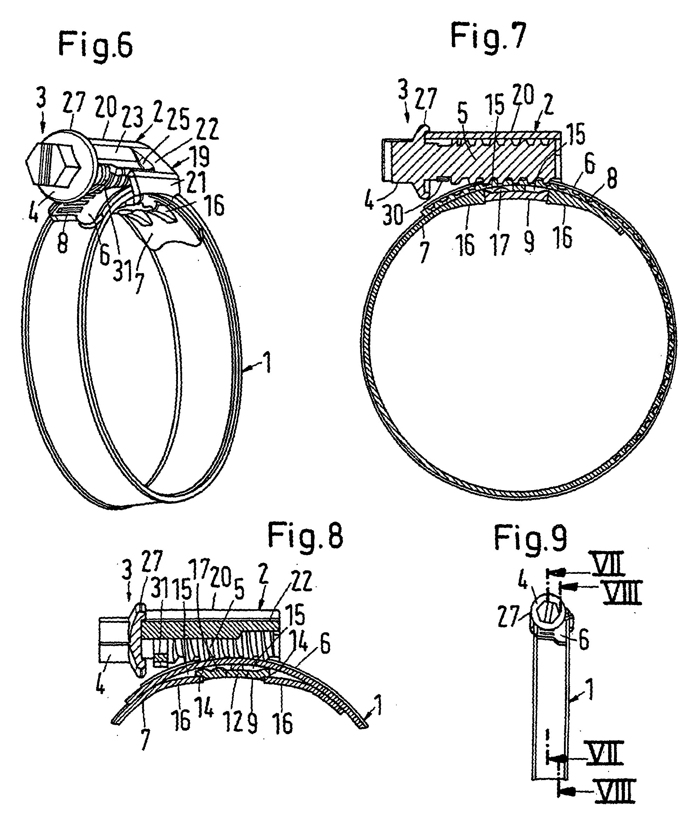

- Fig. 6: eine andere perspektivische Ansicht der erfindungsgemäßen Schneckengewindeschelle im geschlossenen Zustand,
- Fig. 7: den Schnitt VII-VII der geschlossenen Schnekkengewindeschelle nach Fig. 9,
- Fig. 8: den Schnitt VIII-VIII der Schneckengewindeschelle nach Fig. 9,
- Fig. 9: eine Ansicht der erfindungsgemäßen Schneckengewindeschelle im geschlossenen Zustand vom Schraubenkopfende her in verkleinertem Maßstab,
- Fig. 10: eine perspektivische Ansicht des Gehäuses der erfindungsgemäßen Schneckengewindeschelle in vergrößertem Mäßstab,
- Fig. 11: eine Unteransicht des Gehäuses der Schneckengewindeschelle in einem etwas gegenüber Fig. 10 verkleinertem Maßstab,
- Fig. 12: eine Seitenansicht des Gehäuses nach Fig. 11,
- Fig. 13: eine Vorderansicht des Gehäuses nach Fig. 11,
- Fig. 14: eine andere Seitenansicht des Gehäuses nach Fig. 11,
- Fig. 15: eine Draufsicht des Gehäuses nach Fig. 11,
- Fig. 16: eine perspektivische Ansicht des Spannbands der erfindungsgemäßen Schneckengewindeschelle im geöffneten Zustand,
- Fig. 17: eine perspektivische Ansicht des Spannbands der erfindungsgemäßen Schneckengewindeschelle im zusammengerollten Zustand,
- Fig. 18: den Schnitt XVIII-XVIII der Fig. 19 und
- Fig. 19: eine Draufsicht auf das Spannband der erfindungsgemäßen Schneckengewindeschelle im geöffneten Zustand.

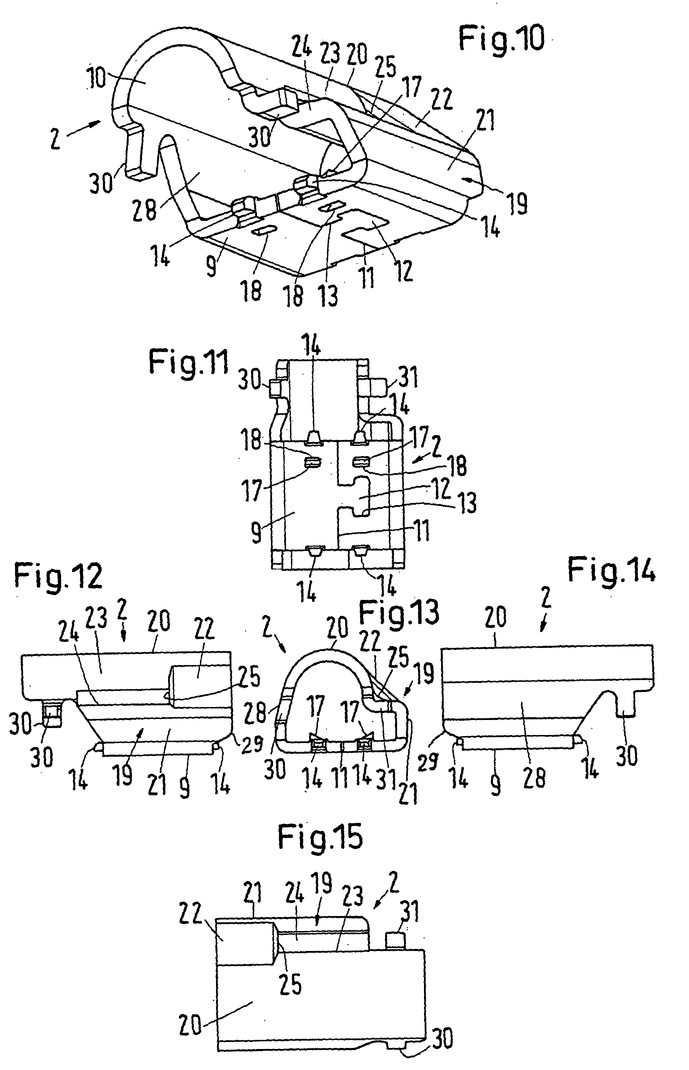

Die dargestellte Schneckengewindeschelle besteht aus einem Spannband 1, einem Gehäuse 2 und einer rechtsgängigen Spannschraube 3 mit einem Kopf 4 und einem Gewindeschaft 5. Das Spannband 1 hat sich in Umfangsrichtung der Schneckengewindeschelle überlappende Endabschnitte 6 und 7, von denen der radial äußere Endabschnitt 6 mit Gewindeelementen 8 in Form etwa axialer, aus dem Spannband 1 herausgedrückter Rippen versehen ist, die mit dem Gewindeschaft 5 in Eingriff stehen. Der radial innere Endabschnitt 7 ist mit einem Boden 9 des die Endabschnitte 6, 7 und den Gewindeschaft 5 umgebenden Gehäuses 2 formschlüssig verbunden. Das Gehäuse 2 stützt die Spannschraube 3 in beiden Umfangsrichtungen der Schelle ab und besteht aus einem Gehäuseband 10, dessen Enden im Bereich des Bodens 9 längs einer Stoßfuge 11 (Fig. 10 und 11) formschlüssig verbunden sind. Die formschlüssige Verbindung ist durch ineinandergreifende Hinterschneidungen der die Stoßfuge 11 begrenzenden Ränder des Gehäusebandes 10 gebildet. Die ineinandergreifenden Hinterschneidungen bestehen einerseits aus einem hammerkopfförmigen Fortsatz 12 am einen Ende des Gehäusebandes 10 und andererseits aus einer dem Fortsatz angepaßten hammerkopfförmigen Aussparung 13 im anderen Ende des Gehäusebands 10 (Fig. 10 und 11). Anstelle der Hammerkopf-Verbindung 12, 13 kann auch eine Schwalbenschwanz-Verbindung vorgesehen sein.

Der Boden 9 des Gehäuses 2 hat an seinen Querrändern beiderseits der Stoßfuge 11 jeweils eine radial nach außen abgewinkelte Zunge 14, die jeweils durch eine eigene jeder Zunge 14 zugeordnete Öffnung 15 im radial inneren Endabschnitt 7 des Spannbands 1 ragt. Ferner greift jede Zunge in eine radial nach innen gedrückte, vom jeweiligen Bodenrand weg in Umfangsrichtung des Spannbands 1 gerichtete Sicke 16 passend ein, wobei die Sicken 16 jeweils an eine der Öffnungen 15 angrenzen.

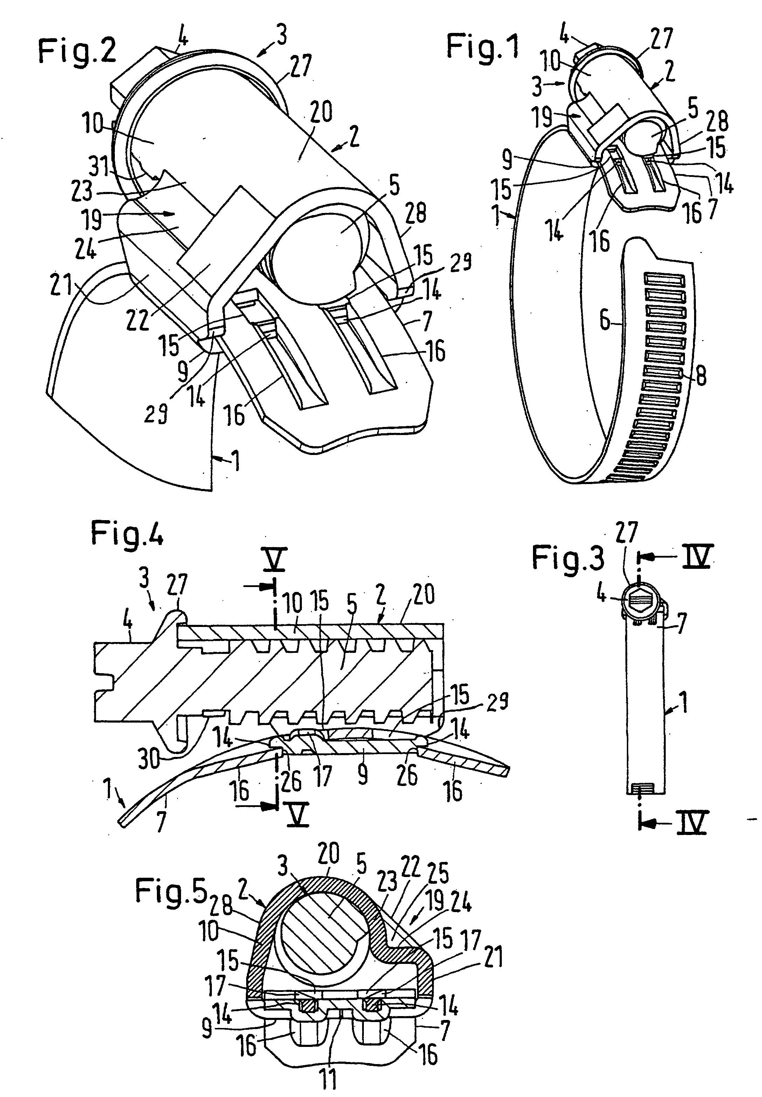

Wie insbesondere die Fig. 4 und 10 erkennen lassen, sind die Zungen 14 von der Unterseite des Gehäusebodens 9 weg radial nach außen gedrückt.

Die radial äußeren Ecken der freien Enden der Zungen 14 sind abgeschrägt, so daß sie nicht über den radial äußeren Rand der durch die Sicken 16 gebildeten Vertiefungen oder Nuten radial nach außen hinausragen und demzufolge eine Bewegung des radial äußeren Endabschnitts 6 über die Zungen 14 hinweg nicht behindern.

Ferner hat der Gehäuseboden 9 beiderseits der Stoßfuge 11 über seine Innenseite vorstehende Vorsprünge 17, die in die dem Schraubenkopf 4 zunächst liegenden Öffnungen 15 im Endabschnitt 7 des Schellenbands 1 ragen.

Die Vorsprünge 17 sind durch zwischen den Schenkeln U-förmiger Einschnitte 18 im Boden 9 herausgedrückte Laschen gebildet, die mit ihrem freien Ende an jeweils einem der am weitesten von der Stoßfuge 11 entfernt liegenden Ränder der Öffnungen 15 anliegen.

Das Gehäuse 2 hat nur auf seiner - bei oberhalb des Spannbands 1 liegender Spannschraube 3 in Richtung vom Kopf 4 zum Schaft 5 der Spannschraube 3 gesehen - rechten Seite einen seitlichen Ausleger 19, dessen Wand radial außerhalb des radial äußeren Endabschnitts 6 des Spannbands 1 neben dem freien Ende des Spannschraubenschafts einen von einem gewölbten First 20 des Gehäuses 2 tangential zu einem radialen Wandteil 21 des Auslegers 19 schräg abfallenden Wandteil 22 aufweist. Ferner hat der Ausleger neben einem mittleren Abschnitt des Spannschraubenschafts 5 einen an diesem anliegenden gewölbten Wandteil 23 und einen den gewölbten Wandteil 23 mit dem radialen Wandteil 21 verbindenden axialen Wandteil 24.

Der gewölbte Wandteil 23 und der axiale Wandteil 24 sind durch Eindrückung der Seitenwand des Gehäuses 2 gebildet. Dabei verbleibt ein quer zur Spannschraube 3 verlaufender Wandteil 25 zwischen dem schräg abfallenden Wandteil 22, dem gewölbten Wandteil 23 und dem axialen Wandteil 24.

Die Ebene des quer verlaufenden Wandteils 25 kreuzt etwa die Mitte des mit dem Spannband 1 in Gewindeeingriff stehenden Abschnitts der Spannschraube 3.

Die Unterkante der Sicken 16 fluchtet weitgehend mit der Unterseite des Gehäusebodens 9, und die Tiefe der Sicken 16 nimmt von ihrem an der jeweiligen Öffnung 15 angrenzenden Ende bis zu ihrem oberen Ende stetig bis auf null ab. Dadurch ergibt sich ein weitgehend kontinuierlicher Übergang zwischen dem Gehäuseboden 9 und der Innenseite des Spannbands mit entsprechend gleichmäßiger Einspanndruckverteilung über den Umfang eines durch die Schneckengewindeschelle auf einem Stutzen oder dergleichen festgeklemmten Schlauches.

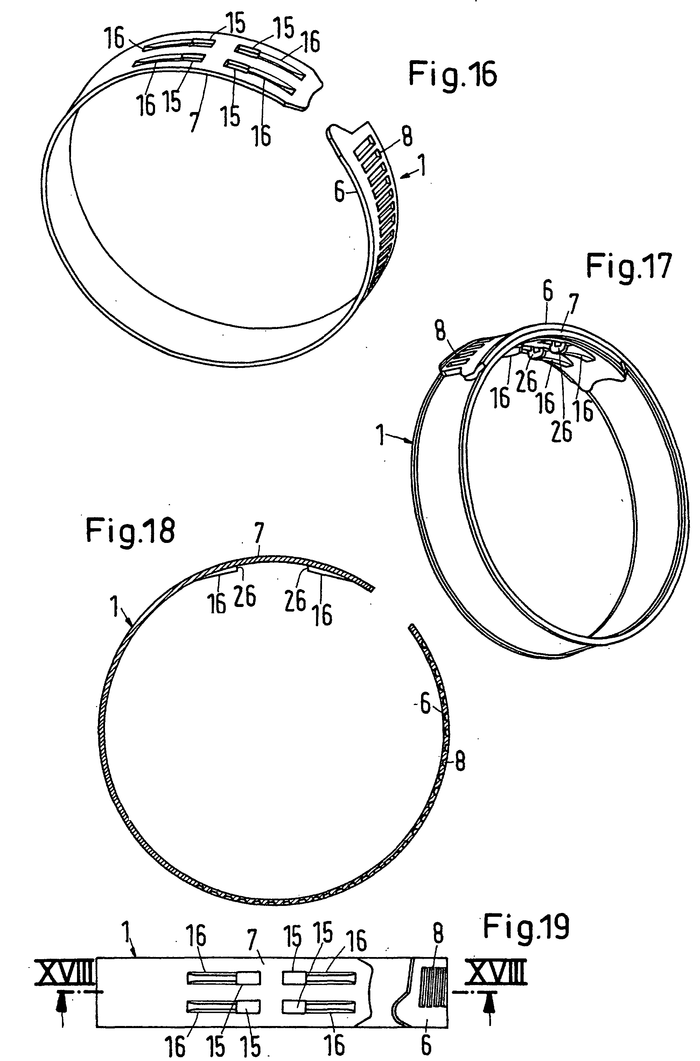

Bei dieser Schneckengewindeschelle stützen sich die Querränder des Gehäusebodens beim Spannen oder Entspannen der Schneckengewindeschelle an den beiderseits der Zungen 14 liegenden freien radialen Stirnflächen der Öffnungsränder 26 (Fig. 4, 17, 18) der Sicken 16 in Umfangsrichtung des Schellenbands ab, insgesamt mithin an vier Flächen pro Querrand. Die Stützflächen sind daher insgesamt größer als im bekannten Fall (DE 196 33 435 C1), bei dem sich die Querränder des Gehäusebodens 9 jeweils an nur zwei neben jedem Zungenpaar liegenden Flächen einer das Zungenpaar aufnehmenden Öffnung der Seitenwand der im Schellenband ausgebildeten Quernut abstützen. Dementsprechend ist die Flächenpressung auf seiten der Sickenöffnungsränder und der Querränder des Gehäusebodens geringer und die Verbindung zum Gehäuseboden 2 und Schellenband 1 mit einer höheren Spannkraft in Umfangsrichtung des Schellenbands ohne Materialverformung belastbar. Darüber hinaus tragen die Zungen 14 durch den Eingriff in die Sicken 16 zum Zusammenhalt der beiden Enden des Gehäusebands 10 im Bereich der Stoßfuge 11 bei. Zusätzlich tragen die in die Öffnungen 15 des radial inneren Endabschnitts 16 des Schellenbands 1 eingreifenden Vorsprünge 17 zum Zusammenhalt der Gehäusebandenden auf der am stärksten in Querrichtung (axial) belasteten, am nächsten beim Spannschraubenkopf 4 liegenden Seite des Gehäusebodens 9 bei. Dadurch daß die Zungen 14 von der Unterseite des Gehäusebodens 9 weg radial nach außen gedrückt sind, ergibt sich ein weitgehend stetiger Übergang zwischen der Unterseite des Gehäusebodens 9 und der radial inneren Kante der Sicken 16. Auch im radial inneren Bereich der Öffnungsränder 26 der Sicken 16 können sich mithin die Querränder des Gehäusebodens 9 in Umfangsrichtung des Schellenbands abstützen.

Der Ausleger 19 verhindert ein seitliches Wegkippen des Gehäuses 2 bei einer Rechtsdrehung der Spannschraube 3, während die Schneckengewindeschelle gespannt wird, da sich die Spannschraube 3 zum einen mit ihrem Gewindeschaft 5 auf der Oberseite des radial äußeren Endabschnitts 6 abzurollen bestrebt ist und zum anderen durch die schrägen Gewindeelemente 8 mit einer axialen Kraftkomponente zur Seite in Richtung zum Ausleger 19 hin gedrückt wird. Die beim Festziehen der Spannschraube 3 auf die in Fig. 5 rechte Gehäusewand ausgeübte Kraft ist zwar bestrebt, den gewölbten Wandteil 23 nach rechts außen in Fig. 5 aufzubiegen, d.h. zu strecken, doch wird dies durch den axialen Wandteil 24 und den quer verlaufenden Wandteil 25 bis zu sehr hohen Spannkräften verhindert. Obwohl der Spannschraubenkopf 4 mit einem Flansch 27 den einen Öffnungsrand des Gehäuses 2 übergreift, um eine Drehung der Spannschraube um eine axiale Querachse beim Spannen zu verhindern, bei der der Spannschraubenkopf 4 bestrebt ist, sich zum Spannband 1 hin zu bewegen, wäre dennoch eine solche Drehung bei sehr hohen Spannkräften nicht ausgeschlossen. Aus diesem Grund ist nicht nur die eine Seitenwand 28 des Gehäuses 2 nahezu eben, d.h. nicht zur Spannschraube 3 hin eingedrückt wie die gegenüberliegende Seitenwand zwischen den Wandteilen 23 und 24, sondern auch der schräg abfallende Wandteil 22 geradlinig, d.h. ohne Eindrückung ausgebildet. Dieser Wandteil 22 sorgt daher zusätzlich dafür, daß sich das Gehäuse 2 zum einen nicht aufweiten und zum anderen dem Drehmoment der Spannschraube 3 um ihre axiale Querachse nicht nachgeben kann.

Darüber hinaus ergibt sich durch den schräg abfallenden Wandteil 22 ein Abstand zwischen einem der Breite des Wandteils 22 in der Länge entsprechenden Endabschnitt des Gewindeschafts 5 der Spannschraube 3 und der Gehäusewand, so daß das Gewinde das Gehäuse im Bereich des schräg abfallenden Wandteils 22 nicht berührt und daher weniger einem Berührungsverschleiß unterliegt. Die Spannschraube 3 ist daher auch nach mehrmaliger Betätigung und Ausübung einer hohen Spannkraft über einen längeren Zeitraum leichtgängig zu betätigen.

Da der quer verlaufende Wandteil 25 des Auslegers 19 weitgehend in der Mitte des mit den Gewindeelementen 8 des Endabschnitts 6 in Eingriff stehenden Abschnitts des Gewindeschafts 5 der Spannschraube 3 liegt, ist dieser am stärksten in Querrichtung belastete Bereich des Gehäuses 2 sehr steif, so daß er auch bei sehr hohen Spannkräften nicht durch die Spannschraube 3 aufgeweitet wird.

Die Ecken 29 an dem dem Spannschraubenkopf 4 abgekehrten Gehäuseende sind abgerundet, so daß sie weniger leicht in das eingespannte Schlauchmaterial eindringen und es demzufolge nicht beschädigen.

Der auf seiten des Spannschraubenkopfes 4 liegende Endabschnitt des Gehäuses 2 ist an seinen radial inneren Rändern mit Laschen 30 und 31 versehen, die nach der Einführung der Spannschraube 3 in das Gehäuse 2 unter den gewindefreien Hals der Spannschraube 3 gebogen werden und eine Rückbewegung der Spannschraube 3 relativ zum Gehäuse 2 beim Öffnen (Entspannen) der Schneckengewindeschelle durch Rückdrehung der Spannschraube 3 verhindern.

## Patentansprüche

1. Schneckengewindeschelle mit einem Spannband (1), einem Gehäuse (2) und einer einen Kopf (4) und einen Gewindeschaft (5) aufweisenden Spannschraube (3), wobei das Spannband (1) sich überlappende Endabschnitte (6, 7) aufweist, von denen der radial äußere mit Gewindeelementen (8) versehen ist, die mit dem Gewindeschaft (5) in Eingriff stehen, und der radial innere Endabschnitt (7) mit einem Boden (9) des die Endabschnitte (6, 7) und den Gewindeschaft (5) der Spannschraube (3) umgebenden Gehäuses (2), das die Spannschraube (3) in beiden Umfangsrichtungen der Schelle abstützt, formschlüssig verbunden ist, wobei das Gehäuse (2) aus einem Gehäuseband (10) besteht, dessen Enden im Bereich des Bodens (9) eine Stoßfuge (11) begrenzen und miteinander durch ineinandergreifende Hinterschneidungen (12, 13) ihrer die Stoßfuge (11) begrenzenden Ränder verbunden sind, wobei der Boden (9) des Gehäuses (2) wenigstens an seinem dem Spannschraubenkopf (4) abgekehrten Querrand beiderseits der Stoßfuge (11) eine radial nach außen abgewinkelte Zunge (14) aufweist, die durch eine Öffnung (15) im radial inneren Endabschnitt (7) des Spannbands (1) ragt, **dadurch gekennzeichnet, daß** die Zungen (14) in Umfangsrichtung des Spannbands (1) gerichtet sind und jeder Zunge (14) eine eigene Öffnung (15) zugeordnet ist, an die eine radial nach innen gedrückte, vom jeweiligen Bodenrand weg in Umfangsrichtung des Spannbands (1) gerichtete Sicke (16) angrenzt, in die jeweils eine der Zungen (14) passend eingreift.

2. Schneckengewindeschelle nach Anspruch 1, **dadurch gekennzeichnet, daß** die Zungen (14) von der Unterseite des Gehäusebodens (9) weg radial nach außen gedrückt sind.

3. Schneckengewindeschelle nach Anspruch 1 oder 2, **dadurch gekennzeichnet, daß** der Gehäuseboden (9) beiderseits der Stoßfuge (11) über seine Innenseite vorstehende Vorsprünge (17)aufweist, die in die dem Schraubenkopf (4) zunächstliegenden Öffnungen (15) ragen.

4. Schneckengewindeschelle nach Anspruch 3, **dadurch gekennzeichnet, daß** die Vorsprünge (17) durch zweischen den Schenkeln U-förmiger Einschnitte (18) im Boden (9) herausgedrückte Laschen gebildet sind, die mit ihrem freien Ende an jeweils einem der am weitesten von der Stoßfuge (11) entfernt liegenden Ränder der Öffnungen (15) anliegen.

5. Schneckengewindeschelle nach einem der Ansprüche 1 bis 4, **dadurch gekennzeichnet, daß** das Gehäuse (2) nur auf seiner, bei oberhalb des Spannbands (1) liegender Spannschraube (3) in Richtung vom Kopf (4) zum Schaft (5) der Spannschraube (3) gesehen, rechten Seite einen seitlichen Ausleger (19) aufweist, dessen Wand radial außerhalb des radial äußeren Endabschnitts (6) des Spannbands (1) neben dem freien Ende des Spannschraubenschafts (5) einen von einem gewölbten First (20) des Gehäuses (2) tangential zu einem radialen Wandteil (21) des Auslegers (19) schräg abfallenden Wandteil (22) und neben einem mittleren Abschnitt des Spannschraubenschafts (5) einen an diesem anliegenden gewölbten Wandteil (23) und einen den gewölbten Wandteil (23) mit dem radialen Wandteil (21) verbindenden axialen Wandteil (24) aufweist.

6. Schneckengewindeschelle nach Anspruch 5, **dadurch gekennzeichnet, daß** der gewölbte Wandteil (23) und der axiale Wandteil (24) durch Eindrückung der Seitenwand des Gehäuses (2) gebildet sind, so daß ein quer zur Spannschraube (3) verlaufender Wandteil (25) zwischen dem schräg abfallenden Wandteil (22), dem gewölbten Wandteil (23) und dem axialen Wandteil (24) verbleibt.

7. Schneckengewindeschelle nach Anspruch 6, **dadurch gekennzeichnet, daß** die Ebene des quer verlaufenden Wandteils (25) etwa die Mitte des mit dem Spannband (1) in Gewindeeingriff stehenden Abschnitts der Spannschraube (3) kreuzt.

8. Schneckengewindeschelle nach einem der Ansprüche 1 bis 6, **dadurch gekennzeichnet, daß** die Ecken (29) an dem dem Spannschraubenkopf (4) abgekehrten Gehäuseende abgerundet sind.

9. Schneckengewindeschelle nach einem der Ansprüche 1 bis 8, **dadurch gekennzeichnet, daß** die radial äußeren Ecken der freien Enden der Zungen (14) abgeschrägt sind.

10. Schneckengewindeschelle nach einem der Ansprüche 1 bis 9, **dadurch gekennzeichnet, daß** die Unterkante der Sicken (16) mit der Unterseite des Gehäusebodens (9) weitgehend fluchtet und die Tiefe der Sikken (16) von ihrem an der jeweiligen Öffnung angrenzenden Ende bis zu ihrem anderen Ende stetig bis auf null abnimmt.

## Claims

1. Worm-drive clamp comprising a clamping strip (1), a housing (2), and a tensioning screw (3) comprising a head (4) and a threaded shaft (5), wherein the clamping strip (1) comprises overlapping end portions (6, 7), the radially outwardly positioned one of the end portions is provided with thread elements (8) which engage the threaded shaft (5), and the radially inner end portion (7) is form-lockingly connected with a bottom (9) of the housing (2) surrounding the end portions (6,7) and the threaded shaft (5) of the tensioning screw (3), the housing (2) supports the tensioning screw (3) in both circumferential directions of the clamp, the housing consists of a housing band (10) whose ends delimit an open butt joint in the area of the housing bottom (9) and are connected to one another by interlocking undercuts (12, 13) of their edges defining the open butt joint (11), the bottom (9) of the housing (2) comprises at least on the transverse edge facing away from the head (4) of the tensioning screw, a radially outwardly angled tongue (14) on both sides of the open butt joint (11), and the tongue penetrates through an opening (15) in the radially inwardly positioned end portion (7) of the clamping strip, **characterized in that** the tongues (14) are oriented in the circumferential direction of the clamping strip (1) and **in that** each tongue (14) has correlated therewith its own opening (15) having positioned adjacent thereto a radially inwardly pressed depression (16) oriented away from the respective bottom edge in the circumferential direction of the clamping strip (1), wherein each depression is matchingly engaged by a tongue, respectively.

2. Worm-drive clamp according to claim 1, **characterised in that** the tongues (14) are pressed away from the underside of the housing bottom (9) radially outwardly.

3. Worm-drive clamp according to claim 1 or 2, **characterised in that** the housing bottom (9) has on both sides of the open butt joint (11) projections (17) projecting past the inner side of the housing bottom (9) into the openings (15) positioned closest to the tensioning screw head (4).

4. Worm-drive clamp according to claim 3, **characterised in that** the projections (17) are formed by tabs formed between the legs of U-shaped cuts (18) in the bottom (9) and pressed out of the bottom plane, the tabs resting with their free ends against those edges of the openings (15) positioned farthest away from the open butt joint (11), respectively.

5. Worm-drive clamp according to any of the claims 1 to 4, **characterised in that** the housing (2) is provided only on its right side, which is defined when the tensioning screw (3) is positioned above the clamping strip (1) and viewed from the head (4) in the direction toward the shaft (5) of the tensioning screw (3), with a lateral stabilizer portion (19) whose wall comprises, in an area radially external to the radially outer end portion (6) of the clamping strip (1) adjacent to the free end of the tensioning screw shaft (5), a wall portion (22) extending from the rounded top (20) of the housing (2) tangentially to a radial wall portion (21) of the stabilizer portion (19) and further comprises, adjacent to a central portion of the threaded shaft (5) of the tensioning screw (3), a curved wall portion (23) resting against the threaded shaft (5) and an axial wall portion (24) connecting the curved wall portion (23) with the radial wall portion (21).

6. Worm-drive clamp according to claim 5, **characterised in that** the curved wall portion (23) and the axial wall portion (24) are formed by pressing the sidewall of the housing (2) inwardly so that a wall portion (25) extending transversely to the tensioning screw is formed between the slanted wall portion (22), the curved wall portion (23) , and the axial wall portion (24).

7. Worm-drive clamp according to claim 6, **characterised in that** the plane of the transversely extending wall portion (25) intercepts approximately the center of the section of the tensioning screw (3) engaging the clamping strip (1) with its thread.

8. Worm-drive clamp according to any of the claims 1 to 6, **characterised in that** the corners (29) of the housing end facing away from the head (4) of the tensioning screw are rounded.

9. Worm-drive clamp according to any of the claims 1 to 8, **characterised in that** the radially outer corners of the free end of the tongues (14) are be beveled.

10. Worm-drive clamp according to any of the claims 1 to 9, **characterised in that** the lower edge of the depressions (16) is substantially aligned with the underside of the housing bottom (9) and the depth of the depressions (16) decreases continuously to zero from the end adjoining the opening, respectively, to the opposite end.

## Revendications

1. Collier de serrage à vis tangente comportant une bande de serrage (1), un boîtier (2) et une vis de serrage (3) qui comporte une tête (4) et une tige filetée (5), dans lequel la bande de serrage (1) possède des sections d'extrémité en chevauchement (6, 7), parmi lesquelles la section d'extrémité radialement extérieure est pourvue d'éléments de filetage (8), qui engrènent avec la tige filetée (5), et la section d'extrémité (7), radialement intérieure, est reliée selon une liaison par formes complémentaires à une base (9) du boîtier (2), qui entoure les sections d'extrémité (6, 7) et la tige filetée (5) de la vis de serrage (3) et qui supporte la vis de serrage (3) dans les deux directions périphériques du collier, et dans lequel le boîtier (2) est constitué par une bande (10) du boîtier, dont les extrémités délimitent un joint d'aboutement (11) dans la zone de la base (9) et sont reliées entre elles par des parties en contre-dépouille (12, 13), qui s'engagent l'une dans l'autre, de leurs bords qui délimitent le joint d'aboutement (11), et dans lequel la base (9) du boîtier (2) comporte au moins sur son bord transversal tourné à l'opposé de la tête (4) de la vis de serrage, des deux côtés du joint d'aboutement (11), une languette (14), qui est coudée radialement vers l'extérieur et qui fait saillie à travers une ouverture (15) située dans la section d'extrémité (7), intérieure du point de vue radial, de la bande de serrage, **caractérisé en ce que** les languettes (14) sont dirigées dans la direction circonférentielle de la bande de serrage (1) et qu'à chaque languette (14) est associée une ouverture propre (15), que jouxte une moulure (16) qui est repoussée radialement vers l'intérieur et s'étend en s'écartant du bord respectif de la base dans la direction circonférentielle de la bande de serrage (1), et dans laquelle respectivement l'une des languettes (14) s'engage d'une manière adaptée.

2. Collier de serrage à vis tangente selon la revendication 1, **caractérisé en ce que** les languettes (14) sont repoussées radialement vers l'extérieur à partir de la face inférieure de la base (9) du boîtier.

3. Collier de serrage à vis tangente selon la revendication 1 ou 2, **caractérisé en ce que** la base (9) du boîtier comporte des deux côtés du joint d'aboutement (11), des parties saillantes (17), qui font saillie sur sa face intérieure et s'engagent dans les ouvertures (15) qui sont les plus proches de la tête de vis (4).

4. Collier de serrage à vis tangente selon la revendication 3, **caractérisé en ce que** les parties saillantes (17) sont formées par des pattes qui sont repoussées entre les branches d'entailles en forme de U (18), dans la base (9), pattes qui s'appliquent par leur extrémité libre contre respectivement l'un des bords des ouvertures (15), qui sont les plus éloignés du joint d'aboutement (11).

5. Collier de serrage à vis tangente selon l'une des revendications 1 à 4, **caractérisé en ce que** le boîtier (2) comporte, uniquement sur son côté droit, vu en direction de la tête (4) par rapport à la tige (5) de la vis de serrage (3), dans le cas où la vis de serrage (3) est située au-dessus de la bande de serrage (1), un bras latéral en console (19), dont la paroi comporte, radialement à l'extérieur de la section d'extrémité (6), extérieure du point de vue radial, de la bande de serrage (1) à côté de l'extrémité libre de la tige (5) de la vis de serrage, un élément de paroi (22), qui descend obliquement depuis un longeron cintré (20) du boîtier (2), tangentiellement à un élément de paroi radial (21) du bras en console (19), et, à côté d'une section médiane de la tige (5) de la vis de serrage, un élément de paroi (23) cintré s'appliquant sur cette section et un élément de paroi axial (24) qui relie l'élément de paroi cintré (23) à l'élément de paroi radial (21).

6. Collier de serrage à vis tangente selon la revendication 5, **caractérisé en ce que** l'élément de paroi cintré (23) et l'élément de paroi axial (24) sont formés par enfoncement de la paroi latérale du boîtier (2), de telle sorte qu'un élément de paroi (25), qui s'étend transversalement par rapport à la vis de serrage (3), subsiste entre l'élément de paroi (22), qui descend obliquement, l'élément de paroi cintré (23) et l'élément de paroi axial (24).

7. Collier de serrage à vis tangente selon la revendication 6, **caractérisé en ce que** le plan de l'élément de paroi transversal (25) passe approximativement au centre de la section de la vis de serrage (3), qui est reliée par vissage à la bande de serrage (1).

8. Collier de serrage à vis tangente selon l'une des revendications 1 à 6, **caractérisé en ce que** les coins (29) sur l'extrémité du boîtier tournée à l'opposé de la tête (4) de la vis de serrage, sont arrondis.

9. Collier de serrage à vis tangente selon l'une des revendications 1 à 8, **caractérisé en ce que** les coins radialement extérieurs des extrémités libres des languettes (14) sont biseautés.

10. Collier de serrage à vis tangente selon l'une des revendications 1 à 9, **caractérisé en ce que** le bord inférieur des moulures (16) est dans une large mesure aligné avec le bord inférieur de la base du boîtier (6) et la profondeur des moulures (16) diminue de façon continue jusqu'à la valeur zéro depuis son extrémité jouxtant l'ouverture respective jusqu'à son autre extrémité.
